# EUROPÄISCHE PATENTSCHRIFT

(11) **EP 3 077 783 B1**
(45) Veröffentlichungstag und Bekanntmachung des Hinweises auf die Patenterteilung: **19.06.2019**
(21) Anmeldenummer: 14796464.7
(22) Anmeldetag: 03.11.2014
(51) Int. Cl.: G01L 13/02, G01L 19/06

(54) **DIFFERENZDRUCKSENSOR**
DIFFERENTIAL PRESSURE SENSOR
CAPTEUR DE PRESSION DIFFERENTIEL

(30) Priorität: 06.12.2013 DE 102013113594
(43) Veröffentlichungstag der Anmeldung: 12.10.2016
(73) Patentinhaber: Endress+Hauser SE+Co. KG, 79689 Maulburg (DE)
(72) Erfinder: JOCHEM, Bernhard, 64289 Darmstadt (DE); KOBER, Timo, 63128 Dietzenbach (DE); LEMKE, Benjamin, 12051 Berlin (DE); WOYCZEHOWSKI, Darina, D-65187 Niederjosbach (DE); TEIPEN, Rafael, 10407 Berlin (DE); THAM, Anh Tuan, 14089 Berlin (DE); WERTHSCHÜTZKY, Roland, 14532 Kleinmachnow (DE)
(74) Vertreter: Andres, Angelika Maria
(86) Internationale Anmeldenummer: PCT/EP2014/073517
(87) Internationale Veröffentlichungsnummer: WO 2015/082145

(56) Entgegenhaltungen:
- US-A- 2 999 386
- US-A- 3 557 621
- US-A- 3 557 621
- US-A1- 2011 239 773

## Beschreibung

Die vorliegende Erfindung betrifft einen Differenzdrucksensor, insbesondere einen Differenzdrucksensor, welcher eine Messmembran zwischen zwei Gegenkörpern und einem kapazitiven Wandler zum Wandeln einer druckabhängigen Auslenkung der Messmembran in mindestens ein elektrisches Signal umfasst, wobei die Gegenkörper jeweils unter Bildung einer Messkammer zwischen dem Gegenkörper und der Messmembran mit der Messmembran verbunden sind, und wobei sich durch die Gegenkörper jeweils ein Druckkanal erstreckt, die Messkammern mit einem ersten bzw. zweiten Druck zu beaufschlagen sind, wobei die Auslenkung der Messmembran von der Differenz zwischen dem ersten Druck und dem zweiten Druck abhängt.

Die Gegenkörper weisen zudem ein Membranbett auf, an dem sich die Messmembran im Falle einer einseitigen Überlast abstützen kann. Differenzdrucksensoren mit solchen Gegenkörpern sind beispielsweise in der Patentanmeldung DE 10 2009 046 229 A1 und DE 10 2011 084 457 A1 beschrieben, wobei die Gegenkörper in diesem Falle Glas aufweisen. Das US-Patent 4,833,920 offenbart einen gattungsgemäßen kapazitiven Differenzdrucksensor, bei welchem die Gegenkörper jeweils eine Gegenkörpereiektrode aufweisen, wobei diese Gegenkörperelektroden jeweils durch eine Metallisierung einer der Messmembran zugewandten Oberfläche präpariert sind, wobei die Elektroden jeweils durch eine Metallisierung der Wand des sich durch den Grundkörper erstreckenden Druckkanals kontaktiert sind. In dem genannten US-Patent weisen die Gegenkörper eine planare Oberfläche auf, wobei die Messmembran in der Ruhelage zwei konkave Oberflächen aufweist, die jeweils einem der Gegenkörper zugewandt sind, wobei die Messmembran in ihrem Randbereich jeweils über Abstandhalter mit einem der Gegenkörper verbunden ist, wodurch sich definierte mechanische Bedingungen für die Messmembran und die beiden kapazitiven Wandler ergeben. Das US-Patent 3,557,621 offenbart einen Differenzdrucksensor mit zwei Gegenkörpern mit jeweils konkaven Membranbetten, auf denen jeweils zwei konzentrischen Elektroden angeordnet sind, von denen die innere jeweils durch einen zentralen Druckkanal kontaktiert ist.

Die Konstruktion dieses Drucksensors ist jedoch sehr aufwändig. Es ist daher die Aufgabe der vorliegenden Erfindung, hier Abhilfe zu schaffen. Die Aufgabe wird erfindungsgemäß gelöst durch den Differenzdrucksensor gemäß dem unabhängigen Patentanspruch 1 und dem Verfahren gemäß dem unabhängigen Patentanspruch 10.

Der erfindungsgemäße Differenzdrucksensor umfasst eine Messmembran; einen ersten Gegenkörper; einen zweiten Gegenkörper; und mindestens einen kapazitiven Wandler, wobei die Messmembran einen elektrisch leitenden Werkstoff aufweist, und mit dem ersten Gegenkörper und dem zweiten Gegenkörper jeweils unter Bildung einer Messkammer zwischen dem ersten bzw. zweiten Gegenkörper entlang eines umlaufenden Randes druckdicht verbunden ist, wobei der erste Gegenkörper und der zweite Gegenkörper einen elektrisch isolierenden Werkstoff aufweisen, wobei die Gegenkörper jeweils ein im Zentrum konkaves Membranbett aufweisen, an dem sich die Messmembran im Falle einer einseitigen Überlast abstützen kann, wobei die Gegenkörper jeweils einen ersten bzw. zweiten Druckkanal aufweisen, der sich von einer der Messmembran abgewandten Rückseite der Gegenkörper durch die Gegenkörper in die jeweilige Messkammer erstreckt, wobei der kapazitive Wandler zumindest eine Gegenkörperelektrode aufweist, welche durch eine metallische Beschichtung auf der der Messmembran zugewandten Oberfläche des Gegenkörpers gebildet ist, wobei die Gegenkörperelektrode durch eine metallische Beschichtung der Wand des Druckkanals von der Rückseite des Gegenkörpers kontaktierbar ist, wobei die metallische Beschichtung der Oberfläche, welche der Messmembran zugewandt ist, einen inneren Bereich aufweist, welcher die Gegenkörperelektrode bildet, und einen äußeren Bereich, welcher den inneren Bereich ringförmig umschließt und von dem inneren Bereich durch einen ringförmigen Isolationsbereich getrennt, wobei die Gegenkörper jeweils einen planaren Randbereich aufweisen, welcher das Membranbett umgibt, wobei das Membranbett zum Randbereich hin einen konvexen Übergangsbereich aufweist, wobei der äußere Bereich der metallischen Beschichtung zumindest teilweise in dem konvexen Übergangsbereich angeordnet ist.

In einer Weiterbildung der Erfindung ist der äußere Bereich der Beschichtung mit der Messmembran elektrisch leitend verbunden. Die elektrisch leitende Verbindung kann einerseits durch Einspannen der Messmembran zwischen den äußeren Rändern der beiden äußeren Bereiche eingespannt werden. Sofern ein natives Oxyd auf eine Silizium-Messmembran einer zuverlässigen elektrische Kontaktierung durch Eispannung ggf. entgegensteht, kann jeweils eine Durchführung von der Rückseite der Gegenkörper her zum Membranbett geführt werden, die im äußeren Bereich der Metallisierung in das Membranbett mündet, um dort den äußeren Bereich der Metallisierung zu kontaktieren. Über diese Durchführung kann dann der äußere Bereich der Beschichtung mit der Messmembran in galvanischen Kontakt gebracht werden, ggf. über eine weitere Durchführung, die sich zum Rand der Messmembran erstreckt.

In einer Weiterbildung der Erfindung weist der Isolationsbereich eine Breite von nicht mehr als 200 µm, insbesondere nicht mehr als 150 µm, bevorzugt nicht mehr als 100 µm und besonders bevorzugt nicht mehr als 80 µm auf.

In einer Weiterbildung der Erfindung weist der innere Bereich der metallischen Beschichtung eine größere Schichtstärke auf, als der äußere Bereich der metallischen Beschichtung, wobei die äußere Schicht insbesondere eine Stärke aufweist, die nicht weniger als das 1,5-fache, vorzugsweise nicht weniger als das Doppelte der Schichtstärke des inneren Bereich der metallischen Beschichtung beträgt.

In einer Weiterbildung der Erfindung beträgt die Schichtstärke des inneren Bereichs der metallischen Beschichtung mindestens 150 nm, bevorzugt mindestens 200 nm.

In einer Weiterbildung der Erfindung weist die metallische Beschichtung zumindest einen metallischen Haftvermittler, insbesondere Chrom, und eine metallische Leitschicht, insbesondere Kupfer, auf.

In einer Weiterbildung der Erfindung weist der innere Bereich der metallischen Beschichtung eine zusätzliche Passivierungsschicht auf, welche insbesondere Nickel umfasst, wobei der äußere Bereich der metallischen Beschichtung mit der metallischen Leitschicht terminiert ist.

In einer Weiterbildung der Erfindung weisen die Gegenkörper Glas auf.

In einer Weiterbildung der Erfindung ist die Messmembran zwischen dem äußeren Bereich der metallischen Beschichtung des ersten Gegenkörpers und dem äußeren Bereich der metallischen Beschichtung des zweiten Gegenkörpers eingespannt.

Das erfindungsgemäße Verfahren zum Präparieren eines Gegenkörpers für einen kapazitiven Differenzdrucksensor, insbesondere für einen erfindungsgemäßen Differenzdrucksensor, wobei der Gegenkörper einen elektrisch isolierenden Werkstoff, insbesondere Glas aufweist, wobei der Gegenkörper ein im Zentrum konkaves Membranbett aufweist, welches gegenüber einem planaren Randbereich des Gegenkörpers abgesenkt ist, wobei sich von einer Rückseite des Gegenkörpers ein Druckkanal durch den Gegenkörper erstreckt, welcher im Bereich des Membranbetts mündet, umfasst die folgenden Schritte:
- Präparieren einer ersten metallischen Teilbeschichtung, welche einen inneren Bereich, einen äußeren Bereich und eine Durchkontaktierung umfasst, wobei der innere Bereich einen zentralen Bereich des Membranbetts bedeckt, wobei der äußere Bereich den inneren Bereich ringförmig umgibt und durch einen ringförmigen Isolationsbereich, der zwischen dem inneren Bereich und dem äußeren Bereich verläuft, von dem inneren Bereich getrennt ist, wobei die Durchkontaktierung an einer Wand des Druckkanals angeordnet ist und eine elektrisch leitende Verbindung zum inneren Bereich aufweist; und
- Präparieren einer zweiten metallischen Teilbeschichtung, welche die Durchkontaktierung und den inneren Bereich bedeckt und den äußeren Bereich sowie den Isolationsbereich frei lässt.

In einer Weiterbildung der Erfindung umfasst das Präparieren der ersten Teilbeschichtung einen Sputterprozess zum Abscheiden eines Metalls.

In einer Weiterbildung der Erfindung wird vor dem Präparieren der ersten Teilbeschichtung im Bereich des Isolationsbereichs ein Lift-off-Lack abgeschieden, wobei die erste Teilbeschichtung des inneren Bereichs und des äußeren Bereichs zunächst zusammenhängend präpariert werden, und wobei der Isolationsbereich vor dem Präparieren der zweiten Teilbeschichtung durch eine Lift-off-Prozess gebildet wird, bei dem der Lift-off-Lack und das darauf abgeschiedene Metall entfernt wird.

In einer Weiterbildung der Erfindung umfasst das Präparieren der zweiten Teilbeschichtung einen galvanischen Prozess.

In einer Weiterbildung der Erfindung umfasst die erste Teilbeschichtung Kupfer, wobei die zweite Teilbeschichtung Nickel aufweist, wobei die Nukleation von Nickel auf der ersten Teilbeschichtung durch einen, insbesondere vorübergehenden, metallischen Kontakt zwischen der ersten Teilbeschichtung und einem unedleren Metall als Nickel initiiert wird, wobei das unedlere Metall insbesondere Eisen oder Aluminium umfasst.

In einer Weiterbildung der Erfindung umfasst die erste Teilbeschichtung weiterhin eine metallische Kontaktfläche, die auf einer dem inneren Bereich abgewandten Rückseite der Gegenkörper angeordnet ist, wobei die Kontaktfläche über die Durchkontaktierung mit dem inneren Bereich im galvanischen Kontakt steht.

In einer Weiterbildung der Erfindung wird eine Vielzahl von Gegenkörpern im Waferverband präpariert. Die erste Teilbeschichtung umfasst dazu zunächst nach dieser Weiterbildung weiterhin eine ggf. später zu entfernende Leiterbahnanordnung, mit welcher die Kontaktflächen der Gegenkörper untereinander verbunden sind, wobei das Herstellen eines vorübergehenden metallischen Kontakts zwischen dem unedleren Metall als Nickel und der ersten Teilbeschichtung im Bereich der Leiterbahnanordnung auf der Rückseite des Waferverbands erfolgt, um damit die Nukleation von Nickel beim Präparieren der zweiten Teilbeschichtung zu initiieren.

Die Kontaktierung zwischen dem unedleren Metall und der ersten Teilbeschichtung im Bereich der Leiterbahnanordnung ermöglicht eine synchrone Initiierung der Nukleation von Nickel für alle Gegenkörper. Damit wird für alle Gegenkörper bei gleicher Prozesszeit im wesentlichen eine gleiche Schichtdicke der Nickelschicht, welche die zweite Teilbeschichtung bildet, erreicht.

Die Erfindung wird nun anhand der in den Fign. dargestellten Ausführungsbeispiele näher erläutert. Es zeigt:
- Fig. 1:: einen Längsschnitt durch einen Gegenkörper eines erfindungsgemäßen Differenzdrucksensors;
- Fig. 2:: einen Längsschnitt durch ein Ausführungsbeispiel erfindungsgemäßen Differenzdrucksensors; und
- Fig. 3:: eine räumliche Darstellung der Rückseite eines Wafers mit Gegenkörpern.

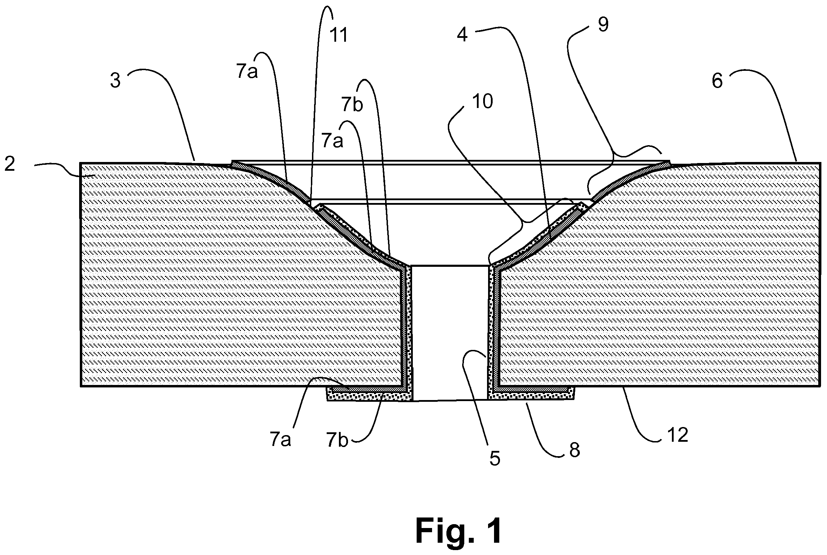

Der in Fig. 1 dargestellte Gegenkörper 2 umfasst Glas, wobei eine frontseitige Oberfläche 3 des Gegenkörpers 2 ein konkaves Membranbett 4 aufweist, welches beispielsweise durch thermisches Einsinken des Grundkörpers geformt ist. Die Tiefe des Membranbetts kann beispielsweise 10 µm bis 20 µm bei einem Durchmesser von 2 bis 4 mm betragen. Die Stärke des Gegenkörpers kann einige 100 µm bis einige 1000 µm betragen. Von dem Membranbett 4 erstreckt sich ein Druckkanal 5 bis zur Rückseite des Gegenkörpers. Das Membranbett 4 ist von einem planaren Randbereich 6 umgeben. Der Gegenkörper weist eine metallische Beschichtung 7 auf, welche sich von einer konvexen Übergangszone zwischen dem Membranbett 4 und dem Randbereich über das Membranbett und durch den Druckkanal 5 bis zu einer Kontaktfläche 8 auf der Rückseite des Gegenkörpers 2 erstreckt. Die Beschichtung umfasst eine erste Teilbeschichtung 7a welche den gesamten Bereich der Beschichtung umfasst, wobei zwischen einem äußeren Bereich 9 der Beschichtung und einem inneren Bereich 10 der Beschichtung ein Isolationsbereich 11 angeordnet ist, welcher frei von metallischer Beschichtung ist. Die erste Teilbeschichtung ist durch Sputtern eines Haftvermittlers, beispielsweise Chrom in einer Stärke von etwa 20 nm und anschließendem Sputtern von Kupfer in einer Stärke von 80-100 nm präpariert, wobei der Isolationsbereich 11 durch einen Lift off-Prozess gebildet ist, durch den die Beschichtung zwischen dem äußeren Bereich in dem inneren Bereich entfernt worden ist.

Die metallische Beschichtung 7 umfasst weiterhin eine zweite Teilbeschichtung 7b, welche sich von dem inneren Bereich 10 über den Druckkanal bis zur der Kontaktfläche 8 auf der Rückseite 12 des Gegenkörpers 2 erstreckt. Die zweite Teilbeschichtung umfasst Nickel in einer Stärke von etwa 100 nm. Die zweite Teilbeschichtung ist insbesondere in einem galvanischen Prozess abgeschieden worden, der im Detail weiter unten erläutert wird.

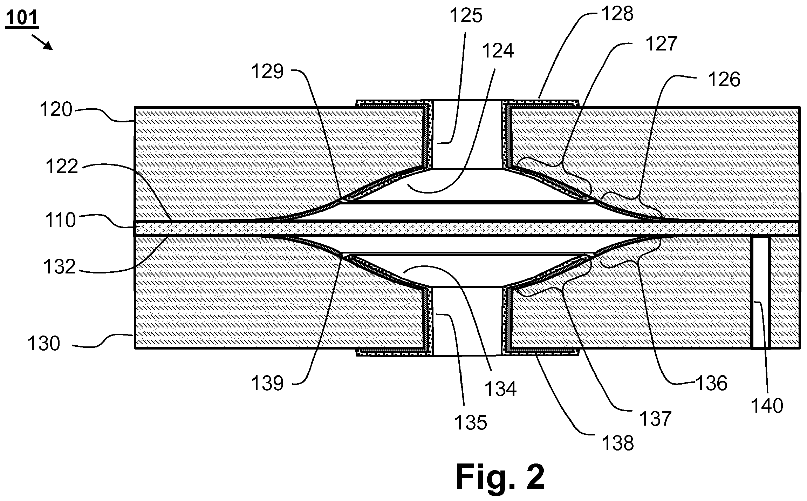

Fig. 2 zeigt nun ein Ausführungsbeispiel eines erfindungsgemäßen Differenzdrucksensors 101, welcher eine Messmembran 110 zwischen einem ersten Gegenkörper 120 und einen zweiten Gegenkörper 130 aufweist, die bei den Gegenkörper 120,130 weisen jeweils die Struktur des im Zusammenhang mit Fig. 1 diskutierten Ausführungsbeispiel eines Gegenkörpers auf. Insbesondere weist der erste Gegenkörper ein erstes Membranbett 124 auf, von dem sich ein Druckkanal 125 zur Rückseite des ersten Gegenkörpers 120 erstreckt. Gleichermaßen weist der zweite Gegenkörper ein zweites Membranbett 134 auf, von dem sich ein zweiter Druckkanal 135 zur Rückseite des zweiten Gegenkörpers erstreckt. Der erste Gegenkörper und der zweite Gegenkörper weisen jeweils eine metallische Beschichtung auf, die einen äußeren Bereich 126,136 umfasst, welcher jeweils in einer Übergangszone zwischen dem Membranbett und einem das Membranbett umgebenden planaren Randbereich angeordnet ist die metallische Beschichtung umfasst weiterhin einen inneren Bereich 127,137, welcher von dem äußeren Bereich jeweils durch einen Isolationsbereich 129,139 getrennt ist. Die metallische Beschichtung erstreckt sich weiterhin jeweils von dem inneren Bereich über die Wand des Druckkanals 125,135 zur Rückseite des Gegenkörpers, um dort eine Kontaktfläche 128,138 zu bilden. Die metallische Beschichtung umfasst im äußeren Bereich 126, 136 einen Haftvermittler, beispielsweise 20 nm Chrom und eine Kupferschicht in einer Stärke von etwa 80-100 nm, welches auf dem zuvor deponierten Chrom abgeschieden ist. Der restliche Teil der metallischen Beschichtung, welcher jeweils den inneren Bereich 127,137, die Wand des Druckkanals 125,135 und die Kontaktfläche 128,138 auf der Rückseite des Gegenkörpers umfasst, weist weiterhin eine Nickelschicht in einer Stärke von beispielsweise 100-150 nm auf, welche auf der Kupferschicht galvanisch abgeschieden ist. Der äußere Bereich ist frei von der Nickelschicht.

Die Messmembran 110 weist insbesondere hoch dotiertes Silizium auf und ist sowohl mit dem ersten Gegenkörper 120als auch mit dem zweiten Gegenkörper 130jeweils entlang einer umlaufenden Fügestelle durch anodisches Bonden druckdicht gefügt. Hierbei erstrecken sich die Fügestellen jeweils bis zum äußeren Rand des äußeren Bereichs 126,136. Da sich der äußere Bereich 126,136 jeweils bis in den planaren Randbereich der Oberfläche des Gegenkörpers hinein erstreckt, wird auf diese Weise die Fügestelle definiert im planaren Bereich begrenzt, so dass die Messmembran 110 eine definierte mechanische Einspannung zwischen den Gegenkörpern 120,130 aufweist. Die Messmembran 110 ist durch den ersten Druckkanal 125 und dem zweiten Druckkanal 135 jeweils mit einem ersten bzw. zweiten Druck beaufschlagbar, wobei der erste Druck dem zweiten Druck entgegenwirkt, und die Messmembran in Abhängigkeit einer Differenz zwischen dem ersten Druck und dem zweiten Druck auslenkbar ist. Der innere Bereich 127 der ersten metallischen Beschichtung des ersten Gegenkörpers 120 bildet zusammen mit der Messmembran 110 einen ersten kapazitiven Wandler zum Erfassen einer Auslenkung der Messmembran 110. Gleichermaßen bildet der innere Bereich 137 der zweiten metallischen Beschichtung des zweiten Gegenkörpers 130 zusammen mit der Messmembran 110 einen zweiten kapazitiven Wandler zum Erfassen einer Auslenkung der Messmembran 110. Der erste kapazitive Wandler und der zweite kapazitive Wandler können zusammen als Differenzialkondensator geschaltet werden, um die Differenz zwischen dem ersten Druck und dem zweiten Druck zu ermitteln.

Die inneren Bereiche der metallischen Beschichtungen, welche jeweils erste bzw. zweite Elektroden des ersten bzw. zweiten kapazitiven Wandlers bilden, sind über die Kontaktflächen 128,138 auf der Rückseite des ersten bzw. zweiten Gegenkörpers kontaktierbar. Um die Messmembran 110 kontaktieren zu können, ist eine Bohrung 140 vorgesehen, welche sich von der Rückseite eines Gegenkörpers bis zur Messmembran 110 erstreckt.

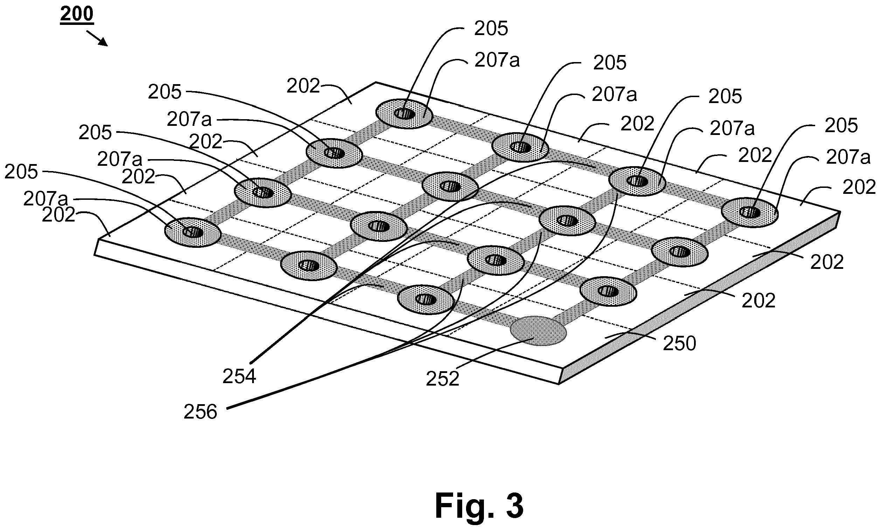

Der in Fig. 3 gezeigte Glaswafer 200 umfasst eine Vielzahl von Gegenkörpern 202, wobei der Glaswafer 200 mit der Rückseite der Gegenkörper 202 nach oben dargestellt ist. Jeder Gegenkörper umfasst auf seiner Rückseite bereits eine erste metallische Teilbeschichtung 207a und eine metallische Teilbeschichtung einer Wand eines Druckkanals 205, welche sich von der Rückseite des Gegenkörpers 202 zu dessen Frontseite erstreckt. Die metallische Teilbeschichtung ist durch Sputtern mit Chrom als Haftvermittler in einer Stärke von etwa 20 nm und durch anschließendes Sputtern von Kupfer in einer Stärke von etwa 80-100 nm präpariert. Die metallische Teilbeschichtung 207a steht jeweils über die metallische Teilbeschichtung der Wand des Druckkanals mit einem inneren Bereich der metallischen Teilbeschichtung auf der Frontseite des Gegenkörpers 202 im galvanischen Kontakt.

Wie weiter oben diskutiert, ist die erste metallische Teilbeschichtung noch mit einer zweiten metallischen Teilbeschichtung zu versehen, um die erste metallische Teilbeschichtung zu schützen. Hierzu ist ein galvanischer Prozess vorgesehen, bei welchem Nickel auf dem Kupfer der ersten metallischen Teilbeschichtung abzuscheiden ist.

Eine Schwierigkeit für diesen Prozess besteht darin, dass die Nukleation von Nickel auf Kupfer nicht spontan erfolgt. Es ist daher erforderlich, das Kupfer mit einem unedleren Metall als Nickel, beispielsweise Eisen, in metallischen Kontakt zu bringen, um die Nukleation von Nickel auf Kupfer zu initiieren. Um dieses Initiieren zu synchronisieren, sind die Teilbeschichtungen 207a der Gegenkörper 202 untereinander über ein Netzwerk von Leiterbahnen 254,256 vernetzt, wobei das Netzwerk auch eine Kontaktfläche 252 aufweist, welche dazu vorgesehen ist von einem Eisenkörper berührt zu werden, um die Nukleation des Nickels auf Kupfer zu initiieren. Wenn die Leiterbahnen 254,256 und die Kontaktfläche 252 des Netzwerks nach der Präparation der zweiten metallischen Teilbeschichtung aus Nickel wieder entfernt werden sollen, können die Oberflächenbereiche des Glaswafers 200, auf denen die Leiterbahnen und die Kontaktfläche 252 zu präparieren sind, zuvor mit einem säureresistenten Lift-off-Lack beschichtet werden, bevor die Strukturen der ersten metallischen Teilbeschichtung 207a auf der Rückseite der Gegenkörper und an der Wand der Druckkanälen, sowie der Leiterbahnen 254,256 und der Kontaktfläche 252 durch Sputtern von Chrom und Kupfer auf der Rückseite des Glaswafers 200 abgeschieden werden. Die Beschichtung mit Nickel kann durch einen galvanischen Prozess erfolgen, der beispielsweise von der Firma Surtec kommerziell erhältlich ist.

Nach dem Abscheiden des Nickels und ggf. dem Entfernen der Kontaktfläche 252 sowie der Leiterbahnen 254,256 können die Gegenkörper 202 entlang der in der Zeichnung gestrichelt dargestellten Schnittlinien vereinzelt werden, wobei ein Wafersegment 250, auf dem die Kontaktfläche 252 präpariert war zu verwerfen ist.

Die solchermaßen präparierten Gegenkörper 202 entsprechen dem anhand von Fig. eins diskutierten Ausführungsbeispiel und stehen zur Herstellung von erfindungsgemäßen Differenzdrucksensoren zur Verfügung.

## Patentansprüche

1. Differenzdrucksensor (101), umfassend eine Messmembran (110);
einen ersten Gegenkörper (120);
einen zweiten Gegenkörper (130); und
mindestens einen kapazitiven Wandler,
wobei die Messmembran (110) einen elektrisch leitenden Werkstoff aufweist, und mit dem ersten Gegenkörper (120) und dem zweiten Gegenkörper (130) jeweils unter Bildung einer Messkammer zwischen dem ersten bzw. zweiten Gegenkörper entlang eines umlaufenden Randes druckdicht verbunden ist,
wobei der erste Gegenkörper und der zweite Gegenkörper einen elektrisch isolierenden Werkstoff aufweisen,
wobei die Gegenkörper jeweils ein im Zentrum konkaves Membranbett aufweisen, an dem sich die Messmembran im Falle einer einseitigen Überlast abstützen kann,
wobei die Gegenkörper jeweils einen ersten bzw. zweiten Druckkanal (125, 135) aufweisen, der sich von einer der Messmembran abgewandten Rückseite der Gegenkörper durch die Gegenkörper in die jeweilige Messkammer erstreckt,
wobei der kapazitive Wandler zumindest eine Gegenkörperelektrode aufweist, welche durch eine metallische Beschichtung auf der der Messmembran zugewandten Oberfläche des Gegenkörpers gebildet ist,
wobei die Gegenkörperelektrode durch eine metallische Beschichtung der Wand des Druckkanals von der Rückseite des Gegenkörpers kontaktierbar ist,
wobei die metallische Beschichtung der Oberfläche, welche der Messmembran zugewandt ist, einen inneren Bereich (127, 137) aufweist, welcher die Gegenkörperelektrode bildet, und einen äußeren Bereich (126, 136), weicher den inneren Bereich ringförmig umschließt und von dem inneren Bereich durch einen ringförmigen Isolationsbereich (129, 139) getrennt ist,
wobei die Gegenkörper jeweils einen planaren Randbereich aufweisen, welcher das Membranbett umgibt,
**dadurch gekennzeichnet, dass**
das Membranbett zum Randbereich hin einen konvexen Übergangsbereich aufweist, wobei der äußere Bereich der metallischen Beschichtung zumindest teilweise in dem konvexen Übergangsbereich angeordnet ist.

2. Differenzdrucksensor nach Anspruch 1, wobei der der äußere Bereich der Beschichtung mit der Messmembran elektrisch leitend verbunden ist.

3. Differenzdrucksensor nach einem der vorhergehenden Ansprüche, wobei der Isolationsbereich eine Breite von nicht mehr als 200 µm, insbesondere nicht mehr als 150 µm, bevorzugt nicht mehr als 100 µm und besonders bevorzugt nicht mehr als 80 µm aufweist.

4. Differenzdrucksensor nach einem der vorhergehenden Ansprüche, wobei der innere Bereich der metallischen Beschichtung eine größere Schichtstärke aufweist als der äußere Bereich der metallischen Beschichtung, wobei der innere Bereich insbesondere eine Stärke aufweist, die nicht weniger als das 1,5-fache, vorzugsweise nicht weniger als das Doppelte der Schichtstärke des äußeren Bereichs der metallischen Beschichtung beträgt.

5. Differenzdrucksensor nach einem der vorhergehenden Ansprüche, wobei die Schichtstärke des inneren Bereichs der metallischen Beschichtung mindestens 150 nm, bevorzugt mindestens 200 nm beträgt.

6. Differenzdrucksensor nach einem der vorhergehenden Ansprüche, wobei die metallische Beschichtung zumindest einen metallischen Haftvermittler, insbesondere Chrom, und eine metallische Leitschicht, insbesondere Kupfer aufweist.

7. Differenzdrucksensor nach Anspruch 6, wobei der innere Bereich der metallischen Beschichtung eine zusätzliche Passivierungsschicht aufweist, welche insbesondere Nickel umfasst, wobei der äußere Bereich der metallischen Beschichtung mit der metallischen Leitschicht terminiert ist.

8. Differenzdrucksensor nach einem der vorhergehenden Ansprüche, wobei die Gegenkörper Glas aufweisen.

9. Differenzdrucksensor nach einem der vorhergehenden Ansprüche, wobei die Messmembran zwischen dem äußeren Bereich der metallischen Beschichtung des ersten Gegenkörpers und dem äußeren Bereich der metallischen Beschichtung des zweiten Gegenkörpers eingespannt ist.

10. Verfahren zum Präparieren eines Gegenkörpers für einen kapazitiven Differenzdrucksensor nach einem der vorhergehenden Ansprüche, wobei der Gegenkörper einen elektrisch isolierenden Werkstoff, insbesondere Glas aufweist, wobei der Gegenkörper ein im Zentrum konkaves Membranbett aufweist, welches gegenüber einem planaren Randbereich des Gegenkörpers abgesenkt ist, wobei sich von einer Rückseite des Gegenkörpers ein Druckkanal durch den Gegenkörper erstreckt, weicher im Bereich des Membranbetts mündet, wobei das Verfahren die folgenden Schritte umfasst:
Präparieren einer ersten metallischen Teilbeschichtung, welche einen inneren Bereich, einen äußeren Bereich und eine Durchkontaktierung umfasst, wobei der innere Bereich einen zentralen Bereich des Membranbetts bedeckt, wobei der äußere Bereich den inneren Bereich ringförmig umgibt und durch einen ringförmigen Isolationsbereich, der zwischen dem inneren Bereich und dem äußeren Bereich verläuft, von dem inneren Bereich getrennt ist, wobei die Durchkontaktierung an einer Wand des Druckkanals angeordnet ist und eine elektrisch leitende Verbindung zum inneren Bereich aufweist;
**dadurch gekennzeichnet, dass** das Verfahren weiterhin umfasst:
Präparieren einer zweiten metallischen Teilbeschichtung, welche die Durchkontaktierung und den inneren Bereich bedeckt und den äußeren Bereich sowie den Isolationsbereich frei lässt.

11. Verfahren nach Anspruch 10, wobei das Präparieren der ersten Teilbeschichtung einen Sputterprozess umfasst, wobei die erste Teilbeschichtung insbesondere zunächst eine Haftvermittlerschicht, welche Chrom enthält, und eine Leitschicht, welche Kupfer enthält, aufweist.

12. Verfahren nach Anspruch 10 oder 11, wobei vor dem Präparieren der erste Teilbeschichtung im Bereich des Isolationsbereichs ein Lift-off-Lack abgeschieden wird, wobei die erste Teilbeschichtung des inneren Bereichs und des äußeren Bereichs zunächst zusammenhängend präpariert werden, und wobei der Isolationsbereich vor dem Präparieren der zweiten Teilbeschichtung durch eine Lift-off-Prozess gebildet wird, bei dem der Lift-off-Lack und das darauf abgeschiedene Metall entfernt werden.

13. Verfahren nach einem der Ansprüche 10 bis 12, wobei das Präparieren der zweiten Teilbeschichtung einen galvanischen Prozess umfasst.

14. Verfahren nach Anspruch 13,
wobei die erste Teilbeschichtung Kupfer umfasst,
wobei die zweite Teilbeschichtung Nickel umfasst,
wobei die Nukleation von Nickel auf der ersten Teilbeschichtung durch einen, insbesondere vorübergehenden, metallischen Kontakt zwischen der ersten Teilbeschichtung und einem unedleren Metall als Nickel initiiert wird, wobei das unedlere Metall insbesondere Eisen oder Aluminium umfasst.

15. Verfahren nach Anspruch 13 oder 14, wobei eine Vielzahl von Gegenkörpern im Waferverband präpariert wird,
wobei die erste Teilbeschichtung weiterhin metallische Kontaktflächen auf einer den inneren Bereichen abgewandten Rückseite der Gegenkörper im Waferverband umfasst,
wobei die Kontaktflächen über die Durchkontaktierungen mit den inneren Bereichen im galvanischen Kontakt stehen,
wobei die erste Teilbeschichtung weiterhin eine ggf. nachträglich zu entfernende Leiterbahnanordnung umfasst, mit welcher die Kontaktflächen untereinander verbunden sind,
wobei die Nukleation von Nickel beim Präparieren der zweiten Teilbeschichtung initiiert wird durch Herstellen eines metallischen Kontakts zwischen dem unedleren Metall als Nickel und der ersten Teilbeschichtung im Bereich der Leiterbahnanordnung auf der Rückseite des Waferverbands.

## Claims

1. Differential pressure sensor (101), comprising a measuring diaphragm (110) ;
a first counter-body (120) ;
a second counter-body (130) ; and
at least a capacitive converter,
wherein the measuring diaphragm (110) has an electrically conductive material and is connected to the first counter-body (120) and the second counter-body (130) in a pressure-tight manner along a peripheral edge, forming in each case a measuring chamber between the first and the second counter-body,
wherein the first counter-body and the second counter-body feature an electrically isolating material,
wherein the counter-bodies each have a membrane bed that is concave in the centre on which the measuring diaphragm can support itself in the event of an overload on one side,
wherein the counter-bodies each have a first and a second pressure channel (125, 135), which extends from a rear side of the counter-body, which is situated opposite the measuring diaphragm, through the counter-bodies and into the respective measuring chamber,
wherein the capacitive converter has at least a counter-body electrode, said electrode being formed by a metal coating on the surface of the counter-body facing towards the measuring diaphragm,
wherein the counter-body electrode can be contacted from the rear of the counter-body by a metal coating of the wall of the pressure channel,
wherein the metal coating of the surface - which faces towards the measuring diaphragm - has an inner area (127, 137) that forms the counter-body electrode, and has an outer area (126, 136) that surrounds the inner area in a circular manner and is separated from the inner area by a circular isolation area (129, 139),
wherein the counter-bodies each have a planar periphery area that surrounds the membrane bed,
**characterized in that**
the membrane bed has a convex transition zone towards the periphery area, wherein the outer area of the metal coating is arranged at least partially in the convex transition zone.

2. Differential pressure sensor as claimed in Claim 1, wherein the outer area of the coating is connected to the measuring diaphragm in an electrically conductive manner.

3. Differential pressure sensor as claimed in one of the previous claims, wherein the isolation area has a width of not more than 200 µm, particularly not more than 150 µm, preferably not more than 100 µm and particularly preferably not more than 80 µm.

4. Differential pressure sensor as claimed in one of the previous claims, wherein the inner area of the metal coating has a larger layer thickness than the outer area of the metal coating, wherein the inner area particularly has a thickness that is not less than 1.5 times, preferably not less than double the layer thickness of the outer area of the metal coating.

5. Differential pressure sensor as claimed in one of the previous claims, wherein the layer thickness of the inner area of the metal coating is at least 150 nm, preferably at least 200 nm.

6. Differential pressure as claimed in one of the previous claims, wherein the metal coating has at least a metal adhesive primer, particularly chromium, and a metal conductive layer, particularly copper.

7. Differential pressure sensor as claimed in Claim 6, wherein the inner area of the metal coating has an additional passivation layer, which comprises nickel in particular, wherein the outer area of the metal coating is terminated with the metal conductive layer.

8. Differential pressure sensor as claimed in one of the previous claims, wherein the counter-bodies feature glass.

9. Differential pressure sensor as claimed in one of the previous claims, wherein the measuring diaphragm is clamped between the outer area of the metal coating of the first counter-body and the outer area of the metal coating of the second counter-body.

10. Procedure for the preparation of a counter-body for a capacitive differential pressure sensor as claimed in one of the previous claims, wherein the counter-body features an electrically isolating material, particularly glass, wherein the counter-body has a membrane bed that is concave at the centre, which is lowered in relation to a planar periphery area of the counter-body, wherein a pressure channel extends from a rear side of the counter-body through the counter-body, and enters into the area of the membrane bed, wherein said procedure comprises the following steps:
Preparation of a first metal partial coating, which comprises an inner area, an outer area and a via connection, wherein the inner area covers a central area of the membrane bed, wherein the outer area surrounds the inner area in a circular manner and is separated from the inner area by a circular isolation area, which extends between the inner area and the outer area, wherein the via connection is arranged on a wall of the pressure channel and has an electrically conductive connection to the inner area;
**characterized in that** the procedure further comprises:
Preparation of a second metal partial coating, which covers the via connection and the inner area, and leaves the outer area and the isolation area free.

11. Procedure as claimed in Claim 10, wherein the preparation of the first partial coating comprises a sputter process wherein the first partial coating initially comprises, in particular, a primer adhesive layer, which contains chromium, and a conductive layer which contains copper.

12. Procedure as claimed in Claim 10 or 11, wherein, prior to the preparation of the first partial coating, a lift-off coating is deposited in the area of the isolation area, wherein the first partial coating of the inner area and of the outer area are first prepared in a cohesive manner, and wherein, prior to the preparation of the second partial coating, the isolation area is formed by a lift-off process where the lift-off coating and the metal deposited on said coating are removed.

13. Procedure as claimed in one of the Claims 10 to 12, wherein the preparation of the second partial coating comprises a galvanic process.

14. Procedure as claimed in Claim 13,
wherein the first partial coating comprises copper,
wherein the second partial coating comprises nickel,
wherein the nucleation of nickel on the first partial coating is initiated by a metal contact, particularly temporary, between the first partial coating and a metal less noble than nickel, wherein the less noble metal comprises iron or aluminum in particular.

15. Procedure as claimed in Claim 13 or 14, wherein a large number of counter-bodies are prepared in the wafer structure,
wherein the first partial coating further comprises metal contact areas on a rear side of the counter-bodies in the wafer structure, said side facing away from the inner areas,
wherein the contact surfaces are in galvanic contact with the inner areas by means of the via connections,
wherein the first partial coating further comprises a conductive track arrangement, which is to be removed subsequently if necessary, by means of said arrangement the contact surfaces are interconnected with one another,
wherein the nucleation of nickel is initiated during the preparation of the second partial coating by establishing a metal contact between the metal that is less noble than nickel and the first partial coating in the area of the conductive track arrangement on the rear of the wafer structure.

## Revendications

1. Capteur de pression différentielle (101), comprenant une membrane de mesure (110) ;
un premier contre-corps (120) ;
une deuxième contre-corps (130) ; et
au moins un convertisseur capacitif,
pour lequel la membrane de mesure (110) présente un matériau électriquement conducteur et est reliée de façon étanche à la pression le long d'un bord périphérique avec le premier contre-corps (120) et le deuxième contre-corps (130) en formant respectivement une chambre de mesure entre le premier et le deuxième contre-corps,
pour lequel le premier contre-corps et le deuxième contre-corps comprennent un matériau électriquement isolant,
pour lequel les contre-corps comportent chacun un lit de membrane concave au centre, contre lequel la membrane de mesure peut s'appuyer en cas de surcharge unilatérale,
pour lequel les contre-corps présentent chacun un premier et un deuxième canal de pression (125, 135), qui s'étend d'une face arrière - située à l'opposé de la membrane de mesure - des contre-corps, à travers les contre-corps dans la chambre de mesure respective,
pour lequel le convertisseur capacitif comprend au moins une électrode de contre-corps, laquelle électrode est formée par un revêtement métallique sur la surface - faisant face à la membrane de mesure - du contre-corps,
pour lequel l'électrode de contre-corps peut être mise en contact par un revêtement métallique de la paroi du canal de pression, depuis la face arrière du contre corps,
pour lequel le revêtement métallique de la surface - qui fait face à la membrane de mesure - présente une zone intérieure (127, 137), laquelle zone forme l'électrode de contre-corps, et une zone extérieure (126, 136), laquelle entoure sous forme annulaire la zone intérieure et est séparée de la zone intérieure par une zone d'isolation annulaire (129, 139),
pour lequel les contre-corps présentent chacun une zone marginale planaire, laquelle zone entoure le lit de membrane,
**caractérisé**
**en ce que** le lit de membrane présente en direction de la zone marginale une zone de transition convexe, la surface extérieure du revêtement métallique étant disposée au moins partiellement dans la zone de transition convexe.

2. Capteur de pression différentielle selon la revendication 1, pour lequel la zone extérieure du revêtement est reliée à la membrane de mesure de manière conductrice électriquement.

3. Capteur de pression différentielle selon l'une des revendications précédentes, pour lequel la zone d'isolation présente une largeur n'excédant pas 200 µm, notamment n'excédant pas 150 µm, de préférence n'excédant pas 100 µm et particulièrement de préférence n'excédant pas 80 µm.

4. Capteur de pression différentielle selon l'une des revendications précédentes, pour lequel la zone intérieure du revêtement métallique présente une épaisseur de couche supérieure à la zone extérieure du revêtement métallique, la zone intérieure présentant notamment une largeur égale à au moins 1,5 fois, de préférence à au moins le double de l'épaisseur de couche de la zone extérieure du revêtement métallique.

5. Capteur de pression différentielle selon l'une des revendications précédentes, pour lequel l'épaisseur de couche de la zone intérieure du revêtement métallique est d'au moins 150 nm, de préférence d'au moins 200 nm.

6. Capteur de pression différentielle selon l'une des revendications précédentes, pour lequel le revêtement métallique présente au moins un agent adhésif métallique, notamment du chrome, et une couche conductrice métallique, notamment du cuivre.

7. Capteur de pression différentielle selon la revendication 6, pour lequel la zone intérieure du revêtement métallique présente une couche de passivation supplémentaire, laquelle couche comprend notamment du nickel, la zone extérieure du revêtement métallique étant terminée avec la couche conductrice métallique.

8. Capteur de pression différentielle selon l'une des revendications précédentes, pour lequel les contre-corps comprennent du verre.

9. Capteur de pression différentielle selon l'une des revendications précédentes, pour lequel la membrane de mesure est serrée entre la zone extérieure du revêtement métallique du premier contre-corps et la zone extérieure du revêtement métallique du deuxième contre-corps.

10. Procédé destiné à la préparation d'un contre-corps pour un capteur de pression différentielle capacitif selon l'une des revendications précédentes, pour lequel le contre-corps comprend un matériau électriquement isolant, notamment du verre, pour lequel le contre-corps présente un lit de membrane concave au centre, lequel lit est abaissé par rapport à une zone marginale planaire du contre-corps, un canal de pression s'étendant depuis la face arrière du contre-corps à travers le contre-corps, lequel canal débouche dans la zone du lit de membrane, le procédé comprenant les étapes suivantes :
Préparation d'une couche partielle métallique, laquelle couche comprend une zone intérieure, une zone extérieure et un trou traversant, la zone intérieure recouvrant une zone centrale du lit de membrane, la zone extérieure entourant de façon annulaire la zone intérieure et étant séparée de la zone intérieure par une zone d'isolation annulaire, qui s'étend entre la zone intérieure et la zone extérieure, le trou traversant étant disposé sur une paroi du canal de pression et présente une liaison électriquement conductrice avec la zone intérieure ;
**caractérisé en ce que** le procédé comprend en outre :
Préparation d'une deuxième couche partielle métallique, laquelle couche recouvre le trou traversant et la zone intérieure, et laisse dégagées la zone extérieure ainsi que la zone d'isolation.

11. Procédé selon la revendication 10, pour lequel la préparation du premier revêtement partiel comprend un procédé de pulvérisation, le premier revêtement partiel comprenant une couche d'agent d'adhésif, notamment dans un premier temps, laquelle couche contient du chrome, et une couche conductrice, laquelle couche contient du cuivre.

12. Procédé selon la revendication 10 ou 11, pour lequel, avant la préparation du premier revêtement partiel est déposé, dans la zone d'isolation, un vernis de lift-off, la première couche partielle de la zone intérieure et de la zone extérieure étant préparées dans un premier temps de façon cohérente, et la zone d'isolation étant formée, avant la préparation de la deuxième couche partielle par un procédé de lift-off, au cours duquel le vernis de lift-off et le métal qui y est déposé sont enlevés.

13. Procédé selon l'une des revendications 10 à 12, pour lequel la préparation de la deuxième couche partielle comprend un procédé galvanique.

14. Procédé selon la revendication 13,
pour lequel la première couche partielle comprend du cuivre,
pour lequel la deuxième couche partielle comprend du nickel,
pour lequel la nucléation de nickel sur la première couche partielle est initiée par un contact métallique, notamment temporaire, entre la première couche partielle et un métal moins noble que le nickel, le métal moins noble comprenant notamment du fer ou de l'aluminium.

15. Procédé selon la revendication 13 ou 14, pour lequel un grand nombre de contre-corps sont préparés dans la tranche semiconductrice,
pour lequel la première couche partielle comprend en outre des surfaces de contact métalliques sur une face arrière - située à l'opposé des zones intérieures - des contre-corps dans la tranche semiconductrice,
pour lequel les surfaces de contact sont en contact galvanique via des trous traversants avec les zones intérieures,
pour lequel la première couche partielle comprend en outre un ensemble de pistes conductrices, le cas échéant à enlever a posteriori, ensemble avec lequel les surfaces de contact sont reliées entre elles,
pour lequel la nucléation de nickel est initiée lors de la préparation de la deuxième couche partielle, par l'établissement d'un contact métallique entre le métal moins noble que le nickel et la première couche partielle dans la zone de l'ensemble de pistes conductrices sur la face arrière de la tranche semiconductrice.
